# EUROPEAN PATENT APPLICATION

(11) **EP 4 737 201 A1**
(43) Date of publication of application: **06.05.2026**
(21) Application number: 25205506.6
(22) Date of filing: 30.09.2025
(51) Int. Cl.: B60L 55/00, H02J 3/32, B60L 53/20, B60L 53/14, B60L 53/62, B60L 53/63, B60L 53/65, B60L 53/66

(54) **POWER SYSTEM, AND ELECTRIC-POWERED VEHICLE**

(30) Priority: 29.10.2024 JP 2024189818
(71) Applicant: TOYOTA JIDOSHA KABUSHIKI KAISHA, Toyota-shi, Aichi-ken 471-8571 (JP)
(72) Inventor: NAKAMURA, Tohru, TOYOTA-SHI, AICHI-KEN, 471-8571 (JP)
(74) Representative: Cabinet Beau de Loménie

(57) **Abstract**

A power system (1) includes power equipment (5) and an electric-powered vehicle (6). The power equipment (5) includes a powering unit and a storage unit. The powering unit powers a power grid (PG) in each of a first period and a second period. The storage unit stores grid code information. The electric-powered vehicle (6) includes a storage device and a control device. When the first period begins, the control device obtains the grid code information from the power equipment (5) and controls the transmit power during the first period, in accordance with the obtained grid code information. The control device stores the obtained grid code information into the storage device. If a predetermined condition is met, the predetermined condition indicating that the electric-powered vehicle (6) has been in stationary across a third period, the control device controls the transmit power during the second period, in accordance with the grid code information stored in the storage device.

## Description

### CROSS REFERENCE TO RELATED APPLICATIONS

This application is based on Japanese Patent Application No. 2024-189818 filed on October 29, 2024 with the Japan Patent Office, the entire content of which is hereby incorporated by reference.

### BACKGROUND

### Field

The present disclosure relates to a power system, and an electric-powered vehicle.

### Description of the Background Art

Japanese Patent Laying-Open No. 2020-22311 discloses a grid-connected system. The system includes an electric-powered vehicle, power equipment, and an interconnection device. The electric-powered vehicle includes a power storage device. The power equipment includes a power conversion device for allowing the power storage device to discharge power. The interconnection device connects a power grid and the power equipment.

### SUMMARY

When the electric-powered vehicle is to participate in power supply regulation at the power grid, the electric-powered vehicle transmits power to the power equipment. The power equipment receives the power and powers the power grid. When the electric-powered vehicle is to participate in the power supply regulation as noted above, the electric-powered vehicle, initially, obtains grid code information indicating a rule for powering the power grid by the power equipment. Subsequently, the electric-powered vehicle controls transmit power to the power equipment in accordance with the obtained grid code information, thereby appropriately participating in the power supply regulation. However, it can take a lot of time for the communications for the electric-powered vehicle to obtain the grid code information from the power equipment. As a result, the timing of the start of output of the transmit power from the electric-powered vehicle to the power equipment delays, and the timing of the start of powering from the power equipment to the power grid may, therefore, delay. In this case, the electric-powered vehicle may not be able to promptly participate in the power supply regulation.

The present disclosure is made to solve problems as noted above, and an object of the present disclosure is to provide a power system and an electric-powered vehicle which enable the electric-powered vehicle to promptly participate in the power supply regulation.

A power system according to the present disclosure includes power equipment and an electric-powered vehicle. The power equipment is connected to a power grid. The power equipment includes a powering unit and a storage unit. The powering unit receives transmit power from the electric-powered vehicle and powers the power grid in each of a first period and a second period subsequent to the first period, the first period and the second period each being a period during which power supply regulation is performed at the power grid. The storage unit stores grid code information indicating a rule for powering the power grid by the powering unit. The electric-powered vehicle includes a storage device, a communication device, a power output device, and a control device. The communication device communicates with the power equipment. The power output device outputs the transmit power to the power equipment. The control device, as the first period begins, obtains the grid code information from the power equipment through the communication device and controls the transmit power during the first period, in accordance with the obtained grid code information. The control device stores the obtained grid code information into the storage device, and when the second period begins and a predetermined condition is met, the predetermined condition indicating that the electric-powered vehicle has been in stationary across a third period from an end of the first period to a beginning of the second period, the control device controls the transmit power during the second period, in accordance with the grid code information stored in the storage device.

With the above configuration, if the electric-powered vehicle remains stationary across the third period and participates in the power supply regulation during the second period, the transmit power during the second period is controlled in accordance with the grid code information stored in the storage device. If the electric-powered vehicle is in stationary across the third period, the same power equipment is used in the first period and the second period. Thus, the grid code information stored in the storage device is suitable grid code information to be used in the second period. Accordingly, the electric-powered vehicle is not required to obtain, again, the grid code information from the power equipment in order to participate in the power supply regulation during the second period. Stated differently, a communication process for obtaining the grid code information at the beginning of the second period can be obviated. As a result, the output of the transmit power from the electric-powered vehicle to the power equipment during the second period can start earlier by the taken by the communication process. As a result, the powering of the power grid by the power equipment quickly starts, allowing the electric-powered vehicle to promptly participate in the power supply regulation in the second period.

According to a certain aspect, the power equipment further includes a power cable for transmission of the transmit power and a connector attached to the power cable. The electric-powered vehicle further includes an inlet to which the connector is connected. The predetermined condition includes a condition that the connector is kept connected to the inlet across the third period.

According to a certain aspect, the electric-powered vehicle further includes a shift lever. The predetermined condition includes a condition that the shift lever is fixed at a parking range across the third period.

According to a certain aspect, the storage unit further stores identification information of the power equipment. The control device obtains the identification information of first equipment through the communication device from the first equipment as the power equipment that receives the transmit power during the first period, the control device obtains the identification information of second equipment through the communication device from the second equipment as the power equipment that receives the transmit power during the second period, and when the identification information of the second equipment is the same as the identification information of the first equipment, the control device controls the transmit power to the second equipment during the second period, in accordance with the grid code information stored in the storage device.

With the above configuration, if the identification information of the second equipment is the same as the identification information of the storage device, the transmit power from the electric-powered vehicle to the second equipment is controlled in accordance with the grid code information stored in the storage device. Due to this, even if the electric-powered vehicle moves after the first period and then participates in the power supply regulation during the second period, the electric-powered vehicle is allowed to promptly participate in the power supply regulation in the second period.

According to a certain aspect, the grid code information includes a predetermined threshold of a frequency or a voltage of the power grid, for limiting the powering by the powering unit.

An electric-powered vehicle according to the present disclosure outputs transmit power to power equipment that powers a power grid during a period of power supply regulation at the power grid. The electric-powered vehicle includes a storage device, a communication device, a power output device, and control device. The communication device communicates with the power equipment. The power output device outputs the transmit power to the power equipment. The control device, when a first period, which is a period for the power supply regulation, begins, obtains grid code information from the power equipment through the communication device and controls the transmit power during the first period, in accordance with the obtained grid code information. The grid code information indicates a rule for powering the power grid by the power equipment. The control device stores the obtained grid code information into the storage device. When a second period, which is a period for the power supply regulation after the first period, begins and a predetermined condition is met, the predetermined condition indicating that the electric-powered vehicle has been in stationary across a third period from an end of the first period to a beginning of the second period, the control device controls the transmit power during the second period, in accordance with the grid code information stored in the storage device.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is an overall block diagram of a power system according to an embodiment of the present disclosure.
Fig. 2 is a diagram depicting a specific configuration of power equipment.
Fig. 3 is a diagram depicting a specific configuration of a vehicle.
Fig. 4 is a diagram illustrating data stored in a storage device.
Fig. 5 is a diagram for illustrating regulation periods according to the embodiment.
Fig. 6 is a flowchart illustrating a procedure executed by the vehicle and the power equipment according to the embodiment.
Fig. 7 is a flowchart illustrating the procedure executed by the vehicle and the power equipment according to the embodiment.
Fig. 8 is a flowchart illustrating a procedure executed by the vehicle and the power equipment according to Variation 2 of the embodiment.
Fig. 9 is a flowchart illustrating the procedure executed by the vehicle and the power equipment according to Variation 2.

### DESCRIPTION OF THE PREFERRED EMBODIMENTS

Hereinafter, embodiment according to the present disclosure will be described, with reference to the accompanying drawings. The same reference sign is given to the same or corresponding part in the figures, and description thereof will not be repeated. The embodiment and variations thereof may be combined as appropriate.

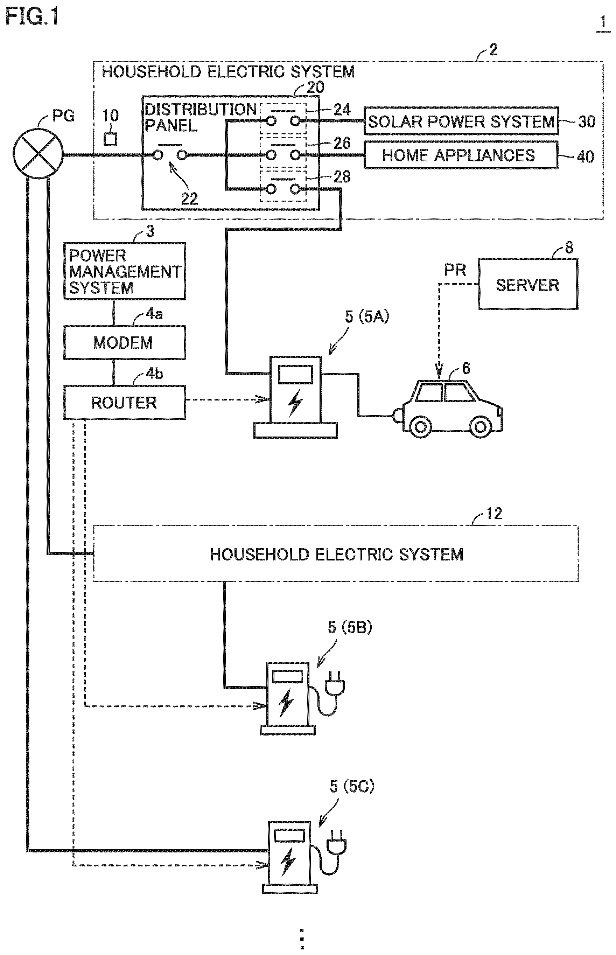

Fig. 1 is an overall block diagram of a power system according to an embodiment. Referring to Fig. 1, a power system 1 includes household electric systems 2 and 12, a power management system 3, a modem 4a, a router 4b, power equipment 5A, 5B, and 5C, a vehicle 6, and a server 8.

Household electric system 2 includes a meter 10, a distribution panel 20, a solar power system 30, and home appliances 40.

Meter 10 outputs and displays various measurements (e.g., a current value and a voltage value) of the power exchanged between household electric system 2 and a power grid PG. Distribution panel 20 includes a main relay 22 and sub relays 24, 26, and 28.

Main relay 22 is turned on or off to switch the electrical connection states between household electric system 2 and power grid PG. Sub relay 24 is turned on or off to switch the electrical connection states between distribution panel 20 and solar power system 30. Sub relay 24 is turned on or off to switch the electrical connection states between distribution panel 20 and home appliances 40. Sub relay 28 is turned on or off to switch the electrical connection states between distribution panel 20 and power equipment 5. In the following description, suppose that the main relay 22 and sub relays 24, 26, and 28 are on.

Power management system 3 is operated by an electricity transmission and distribution provider that manages power grid PG. Power management system 3 is provided to regulate the power demand and supply at power grid PG. For example, power management system 3 defines a period of time during which power supply regulation (described below) is performed. Power management system 3 communicates with power equipment 5A, 5B, and 5C via modem 4a and router 4b to, for example, transmit information indicating the above period of time to these power equipment. Each of power equipment 5A, 5B, and 5C is also denoted as "power equipment 5." Power equipment 5 corresponds to one example of "power equipment" according to the present disclosure.

Power equipment 5A is connected to power grid PG through household electric system 2. Power equipment 5A is connected to vehicle 6 through a power cable. Vehicle 6 is an electric-powered vehicle such as a battery electric vehicle (BEV), a plug-in hybrid electric vehicle (PHEV), or a fuel cell electric vehicle (FCEV). Vehicle 6 can function as a distributed energy resource (DER) for supplying power to power grid PG through power equipment 5 such as power equipment 5A. For example, power equipment 5A receives power supplied from power grid PG through household electric system 2 and supplies the power to vehicle 6, or receives transmit power from vehicle 6 to power power grid PG via household electric system 2.

Server 8 sends a participation request PR to vehicle 6. Participation request PR is a signal requesting vehicle 6 to participate in the power supply regulation at power grid PG. The power supply regulation is regulating the amount of power supplied to power grid PG, specifically, regulating an amount of power fed from multiple distributed energy sources (not shown), including vehicle 6, to power grid PG. The period of time, during which the power supply regulation is performed, will also be referred to as a "regulation period." Participation request PR includes information indicating a regulation period during which the power supply regulation is scheduled to be performed. Participation request PR may be a signal requesting vehicle 6 to immediately participate in the power supply regulation.

Household electric system 12 is the same as household electric system 2, except for not including solar power system 30. Power equipment 5B is the same as power equipment 5A, except for being connected to power grid PG through household electric system 12. Power equipment 5C is the same as power equipment 5A, except for being directly connected to power grid PG, without involving the household electric system. Similarly to power equipment 5A, power equipment 5B and 5C each can receive the transmit power from vehicle 6 and power power grid PG.

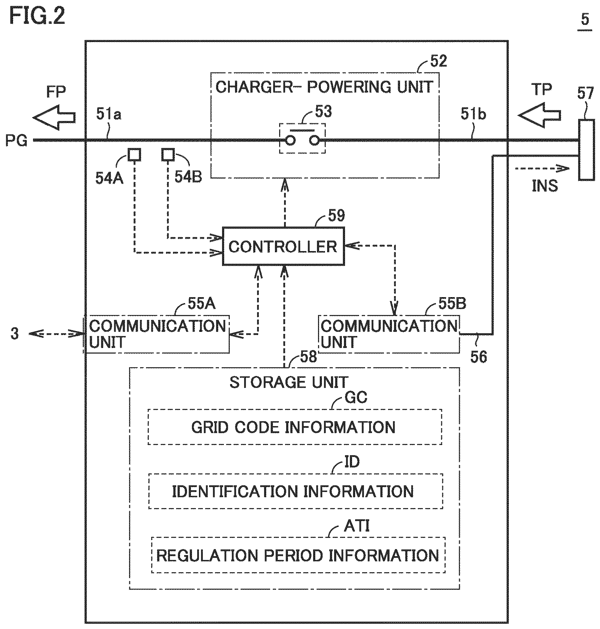

Fig. 2 is a diagram depicting a specific configuration of power equipment 5. Referring to Fig. 2, power equipment 5 includes power cables 51a and 51b, a charger-powering unit 52, sensors 54A and 54B, communication units 55A and 55B, a communications line 56, a connector 57, a storage unit 58, and a controller 59.

Power cable 51a is connected to power grid PG via household electric system 2, and transmits a feed power FP from power equipment 5 to power grid PG. Power cable 51b transmits transmit power TP output from vehicle 6.

Charger-powering unit 52 includes a relay 53. Relay 53 is turned on or off to switch the electrical connection states (connected/disconnected) between power grid PG and power equipment 5. In this example, when relay 53 is on, transmit power TP is supplied to power grid PG, as feed power FP. Charger-powering unit 52 may further include a power conversion device. In this case, the power conversion device converts transmit power TP and outputs feed power FP as the converted power. During the regulation period, charger-powering unit 52 receives transmit power TP from vehicle 6 and supplies feed power FP to power grid PG. This allows charger-powering unit 52 to function as a powering unit for powering power grid PG.

Sensors 54A and 54B measure the voltage and the current, respectively, of feed power FP. Communication unit 55A communicates with power management system 3 through router 4b and modem 4a. Communication unit 55B communicates with vehicle 6 through, for example, a controller area network (CAN) communication, via communications line 56. Communication unit 55B sends an initiation command INS to vehicle 6. Initiation command INS is, for example, a command signal commanding vehicle 6 to immediately start the output of transmit power TP to power equipment 5. Initiation command INS is, for example, sent at a timing indicated by information that is sent from power management system 3 to power equipment 5 through modem 4a and router 4b. Connector 57 is an electric plug attached to power cable 51b and communications line 56.

Storage unit 58 is a rewritable nonvolatile memory such as a hard disk drive (HDD) or a solid state drive (SSD), and stores grid code information GC, identification information ID, and a regulation period information ATI.

Grid code information GC indicates a rule for powering power grid PG by charger-powering unit 52. Grid code information GC is predetermined so that the power quality (e.g., a frequency or voltage) of power grid PG is stabilized. Grid code information GC includes information indicating a predetermined reference range for the above frequency or voltage. The information further includes a predetermined threshold (corresponding to the upper limit for the above reference range) of the frequency or voltage, for limiting the power to power grid PG by charger-powering unit 52. In this regard, a detailed description will be given below.

Grid code information GC further includes information related to various items. Grid code information GC is defined per power equipment 5 and is invariant for power equipment 5 storing it. Grid code information GC depends on surrounding environment of power equipment 5 storing it. In one example, grid code information GC depends on whether power equipment 5, storing it, is connected to the household electric system and whether the household electric system includes solar power system 30. In this example, grid code information GC of power equipment 5A, 5B, and 5C differ from each other.

Identification information ID corresponds to information identifying power equipment 5. Identification information ID depends on power equipment 5 storing it. Thus, identification information ID of power equipment 5A, 5B, and 5C differ from each other. Regulation period information ATI indicates a start time and an end time of a period during which the power supply regulation is performed. Regulation period information ATI is defined based on the information sent from power management system 3 through modem 4a and router 4b.

Controller 59 is a control circuit which controls charger-powering unit 52 and communication units 55A and 55B. Controller 59 exchanges various information external to power equipment 5 (e.g., power management system 3 or vehicle 6) through communication units 55A and 55B. Controller 59 controls charger-powering unit 52 according to, for example, measurements by sensors 54A and 54B and grid code information GC. In one example, if the frequency or voltage of power grid PG exceeds the above-mentioned threshold during powering (power supply overflow at power grid PG), controller 59 controls charger-powering unit 52 to limit the power to power grid PG. Limiting the power to power grid PG is shutting off the power by turning relay 53 off, for example. Alternatively, limiting the power to power grid PG may be outputting a command for reducing transmit power TP to vehicle 6. If charger-powering unit 52 includes a power conversion device, limiting the power to power grid PG may be reducing the output power of the power conversion device. Limiting the power to power grid PG as noted above can prevent excess frequency fluctuations or voltage fluctuations in power grid PG during the regulation period.

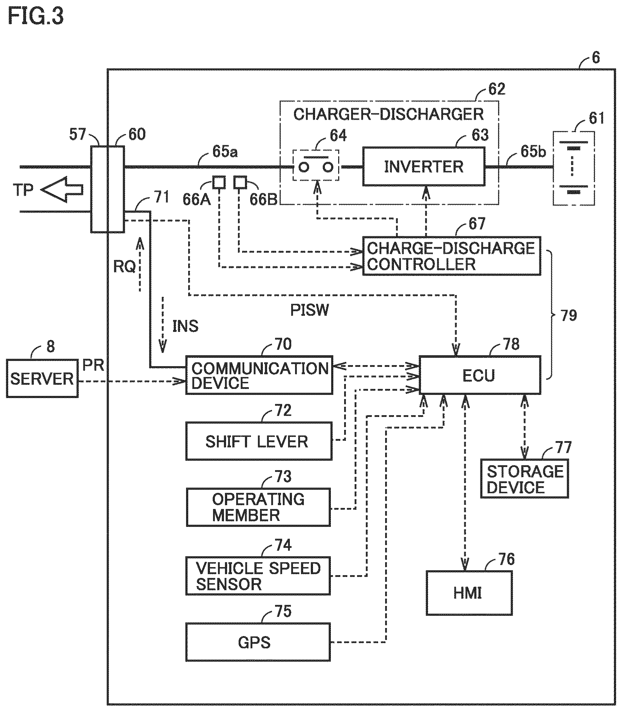

Fig. 3 is a diagram depicting a specific configuration of vehicle 6. Referring to Fig. 3, vehicle 6 includes an inlet 60, a power storage device 61, a charger-discharger 62, power lines 65a and 65b, sensors 66A and 66B, and a charge-discharge controller 67. Vehicle 6 further includes a communication device 70, a communications line 71, a shift lever 72, an operating member 73, a vehicle speed sensor 74, a global positioning system (GPS) 75, a human machine interface (HMI) 76, a storage device 77, and an electronic control unit (ECU) 78.

Inlet 60 is connected (inserted) to connector 57 of power equipment 5. Inlet 60 outputs a signal PISW. Signal PISW indicates a connection state between connector 57 and inlet 60. Signal PISW switches between a logic-high level and a logic-low level, for example, depending on whether connector 57 is connected to inlet 60 or not. Power storage device 61 is, for example, a lithium-ion battery, storing power for driving of vehicle 6.

Charger-discharger 62 includes an inverter 63 and a charge-discharge relay 64. Inverter 63 is a bi-directional power conversion device including multiple switching elements (not shown). When charge-discharge relay 64 is on, inverter 63 converts a direct-current power (discharge power), supplied from power storage device 61 through power line 65b, into an alternating-current power and outputs the converted power. The converted power is output to power equipment 5, as transmit power TP, through charge-discharge relay 64, power line 65a, and inlet 60. Power storage device 61 and charger-discharger 62 correspond to one example of a "power output device" according to the present disclosure.

Sensors 66A and 66B measure the current and the voltage, respectively, of the converted power transmitting through power line 65a. Charge-discharge controller 67 controls inverter 63 and charge-discharge relay 64.

Communication device 70 is configured to communicate with power equipment 5 via communications line 71. For example, communication device 70 receives initiation command INS from power equipment 5, or transmits a request signal RQ to power equipment 5. Request signal RQ requests power equipment 5 to transmit grid code information GC to vehicle 6. Communication device 70 is also configured to receive participation request PR from server 8. Shift lever 72 can switch shift ranges of vehicle 6, in accordance with user operations on vehicle 6. The shift ranges include a neutral (N) range, a reverse (R) range, a drive (D) range, a brake (B) range, and a parking (P) range.

Operating member 73 is operated by a user to apply the parking brake (hand brake) of vehicle 6. Vehicle speed sensor 74 measures the speed of vehicle 6. GPS 75 obtains the positional information of vehicle 6 indicating the current location of vehicle 6. HMI 76, for example, receives inputs of various operations from the user or shows various screens. Storage device 77 is a rewritable nonvolatile memory such as an HDD or an SSD, storing various data.

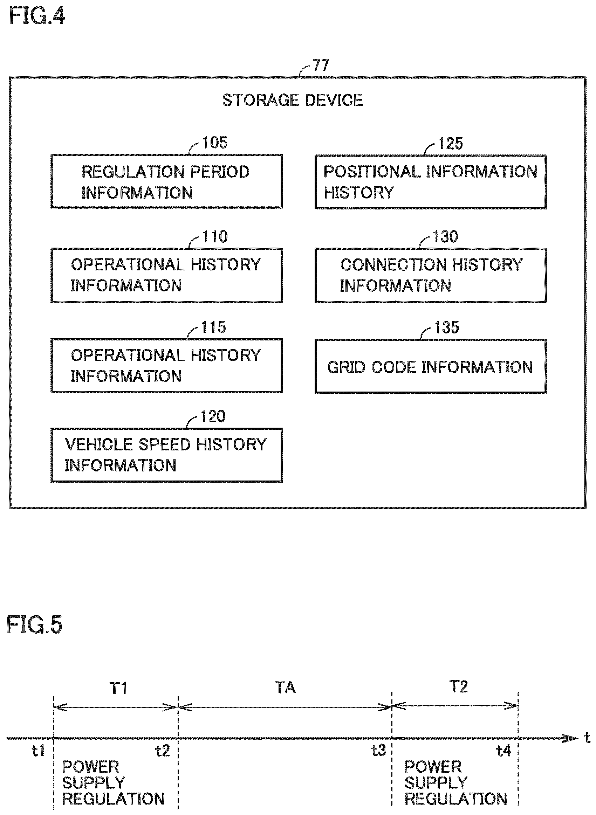

Fig. 4 is a diagram illustrating data stored in storage device 77. Referring to Fig. 4, storage device 77 stores regulation period information 105, operational history information 110 and 115, vehicle speed history information 120, a positional information history 125, connection history information 130, and grid code information 135.

Regulation period information 105 indicates a regulation period (more specifically, the start time and the end time) during which the vehicle 6 is scheduled to participate in the power supply regulation. Regulation period information 105 may be defined by user operations using HMI 76 or defined as regulation period information that is indicated by participation request PR. Regulation period information 105 also includes information indicating the period (more specifically, the start time and the end time) of the power supply regulation that the vehicle 6 has already participated in.

Operational history information 110 represents an operational history of shift lever 72. Specifically, operational history information 110 indicates whether the shift range is N range, R range, D range, B range, or P range at each moment during a most recent time period. The most recent time period is a time period from a time a predetermined time (e.g., three hours) prior to the current time to the current time.

Operational history information 115 represents an operational history of operating member 73. Specifically, operational history information 115 shows whether the parking brake has been applied or not, in association with each moment during the most recent time period.

Vehicle speed history information 120 represents a history of measurements by vehicle speed sensor 74 during the most recent time period. Positional information history 125 represents a history of the positional information of vehicle 6 during the most recent time period. Connection history information 130 represents a history of signal PISW levels during the most recent time period. Grid code information 135 will be described below.

Referring, again, to Fig. 3, ECU 78 includes a memory and a processor, none of which are shown. The memory includes a read only memory (ROM) and a random access memory (RAM). The ROM stores programs that are executed by the processor. The RAM functions as a working memory. The processor is, for example, a central processing unit (CPU) and executes various arithmetic processes according to the above programs.

ECU 78 is communicable with charge-discharge controller 67. ECU 78 exchanges various information with equipment external to vehicle 6, such as power equipment 5 and server 8, through communication device 70. For example, as the regulation period during which the vehicle 6 participates in the power supply regulation begins, ECU 78 obtains grid code information GC of power equipment 5 from power equipment 5 through communication device 70 and communications line 71. ECU 78 receives information indicating user operations, from HMI 76. Charge-discharge controller 67 and ECU 78 are also referred to as a "control device (control circuit) 79."

During the regulation period, charge-discharge controller 67 controls transmit power TP in accordance with the obtained grid code information GC obtained by ECU 78. For example, charge-discharge controller 67 turns charge-discharge relay 64 on and controls inverter 63 according to thresholds included in grid code information GC of power equipment 5 and measurements by sensors 66A and 66B. In one example, based on the measurements by these sensors, charge-discharge controller 67 determines the frequency or voltage of power grid PG, and controls the output power of inverter 63 so that the frequency or voltage is less than a threshold in grid code information GC of power equipment 5.

Fig. 5 is a diagram for illustrating the regulation period according to the embodiment. Referring to Fig. 5, a period T1 (a first period) corresponds to a time period from time t1 to t2. As time t1 arrives and period T1 begins, ECU 78 obtains grid code information GC of power equipment 5 from power equipment 5 through communication device 70. Charge-discharge controller 67 controls transmit power TP during period T1, in accordance with grid code information GC obtained in such a manner. For example, if the frequency or voltage of power grid PG exceeds the threshold, charge-discharge controller 67 reduces the output power of inverter 63 or turns charge-discharge relay 64 off. During period T1, charger-powering unit 52 of power equipment 5, basically, receives transmit power TP from vehicle 6 and supplies feed power FP to power grid PG.

A period T2 (a second period) corresponds to a time period from time t3 to t4 and represents a time period for the power supply regulation after period T1. A period TA corresponds to a time period from time t2 to t3 and represents a time period from the end of period T1 to the beginning of period T2. If vehicle 6 participates in the power supply regulation during period T2 even after period T1, charger-powering unit 52 of power equipment 5 receives transmit power TP from vehicle 6 and supplies feed power FP to power grid PG. The information indicating times t1, t2, t3, and t4 are included in each of regulation period information ATI and 105. Times t1 and t3 each may be defined as a time the power equipment 5 transmits initiation command INS to vehicle 6, a time the vehicle 6 receives initiation command INS from power equipment 5, or a time the vehicle 6 receives participation request PR from server 8.

From the standpoint of stabilization of the power quality of power grid PG, charge-discharge controller 67 needs to control transmit power TP, in accordance with grid code information GC of power equipment 5 so that the vehicle 6 can participate in the power supply regulation. However, grid code information GC includes various types of information as mentioned earlier. Thus, it takes a lot of communication time for ECU 78 to obtain grid code information GC from power equipment 5 via communication device 70. As a result, the timing of the start of output of transmit power TP from vehicle 6 to power equipment 5 delays, and the timing of the start of powering from power equipment 5 to power grid PG may, therefore, delay. In this case, vehicle 6 may not be able to promptly participate in the power supply regulation in the regulation period.

Thus, control device 79 according to the embodiment has a configuration to handle such a problem. Specifically, ECU 78 of control device 79 obtains grid code information GC from power equipment 5 at the beginning of period T1 as noted above, and stores (a first storing process) the obtained grid code information GC into storage device 77, as grid code information 135 (Fig. 4). Then, if (1) period T2 begins and (2) predetermined condition, indicating that the vehicle 6 has been in stationary across period TA, is met, charge-discharge controller 67 of control device 79 controls transmit power TP during period T2, in accordance with grid code information 135 stored in storage device 77. The predetermined condition will also be referred to as "stationary condition." A specific example of the stationary condition will be described below.

If vehicle 6 is in stationary across period TA, vehicle 6 participates in the power supply regulation using the same power equipment 5 (e.g., power equipment 5A) in periods T1 and T2. In this case, grid code information GC used in period T2 is the same as the grid code information GC used in period T1.

According to the first storing process, and the power transmission in accordance with grid code information 135, if vehicle 6 is in stationary across period TA, and participates in the power supply regulation during period T2, transmit power TP during period T2 is controlled in accordance with grid code information 135. If vehicle 6 is in stationary across period TA, the same power equipment 5 (in this example, power equipment 5A) is used for the power supply regulation in periods T1 and T2. Thus, grid code information 135 stored in storage device 77 by the first storing process is suitable grid code information to be used in period T2. Accordingly, ECU 78 is not required to obtain, again, grid code information GC from power equipment 5 (5A) at the beginning of period T2, in order to allow vehicle 6 to participate in the power supply regulation during period T2. Stated differently, a communication process for obtaining grid code information GC at the beginning of period T2 can be obviated. As a result, the output of transmit power TP from vehicle 6 to power equipment 5 during period T2 can start earlier by the time taken for the communication process. As a result, the supply of feed power FP from power equipment 5 to power grid PG quickly starts, allowing vehicle 6 to promptly participate in the power supply regulation during period T2.

For example, the stationary condition is a first condition that the connector 57 is kept connected to inlet 60 across period TA. In this case, ECU 78 determines whether this condition is met, in accordance with regulation period information 105 and connection history information 130. If the first condition is met, connector 57 is not unplugged from inlet 60 in period TA. Thus, it is contemplated that the vehicle 6 is not traveling and is in stationary during period TA. Thus, the first condition appropriately indicates that the vehicle 6 has been in stationary across period TA.

Charge-discharge controller 67 controls transmit power TP in a manner similarly to the above, even during the k-th regulation period (k ≥ 3) after period T2. For example, suppose that (3) the k-th regulation period has begun and (4) the predetermined condition (e.g., the condition that connector 57 is kept connected to inlet 60) has been met, indicating that the vehicle 6 has been in stationary for a period of time from the end time of period T1 to the start time of the k-th regulation period. In this case, again, charge-discharge controller 67 controls transmit power TP during the k-th regulation period, in accordance with grid code information 135 stored in storage device 77, without obtaining grid code information GC from power equipment 5 at the beginning of the k-th regulation period.

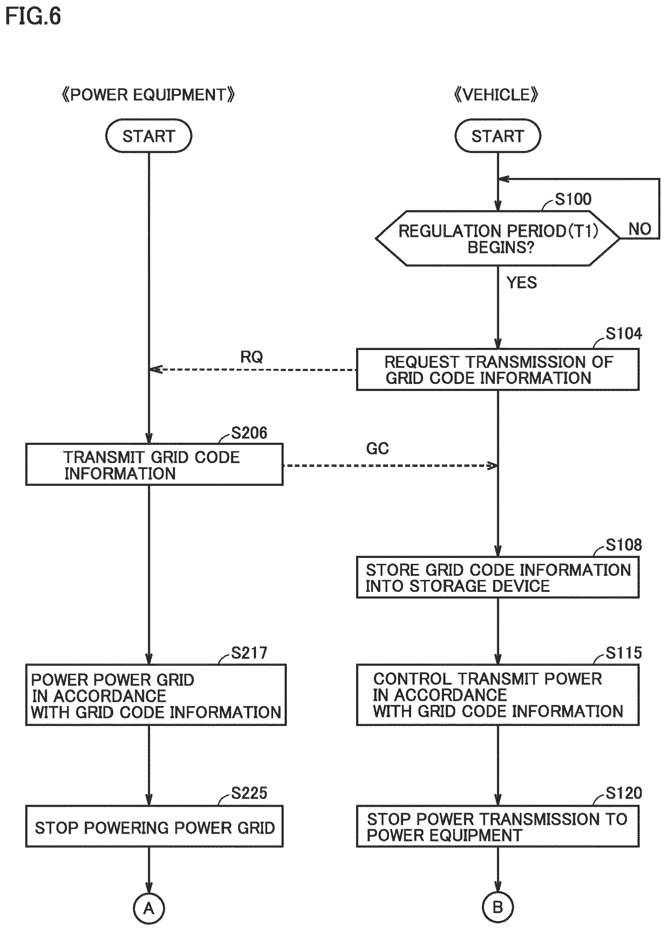

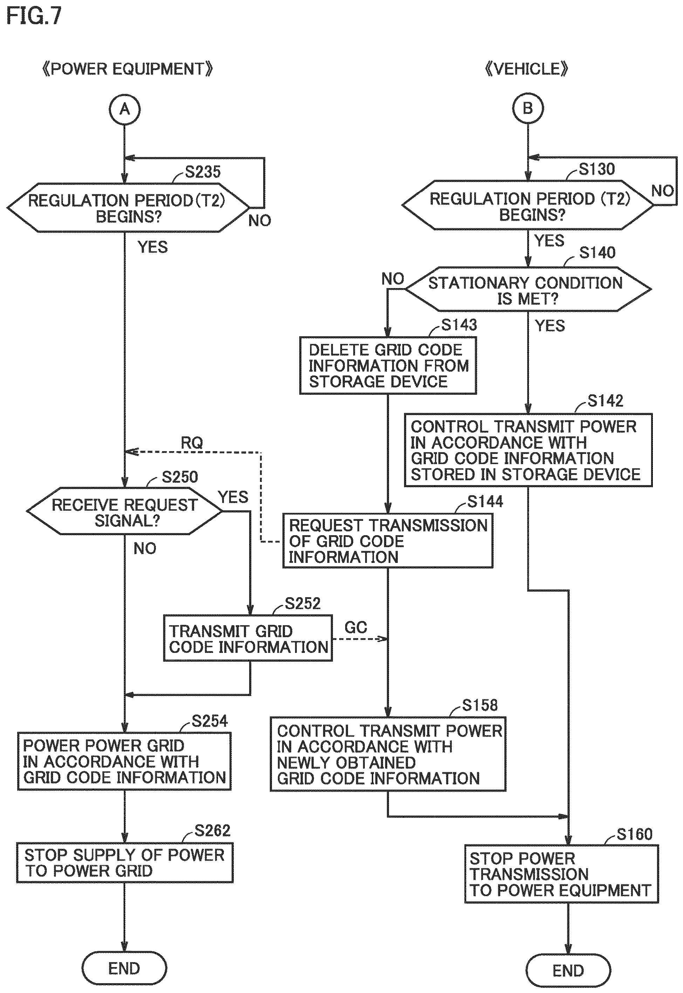

Figs. 6 and 7 are flowcharts illustrating a procedure performed by vehicle 6 and power equipment 5 according to the embodiment. The processes illustrated in the flowcharts start with ECU 78 sensing the connection (plugging) of connector 57 into inlet 60, based on signal PISW. Hereinafter, each process step is abbreviated as "S."

Referring to Fig. 6, ECU 78 determines whether the regulation period has begun (S100). In this example, ECU 78 determines whether the start time of the regulation period has arrived, according to regulation period information 105. Suppose that the regulation period is period T1 (Fig. 5), and the start time is time t1. If time t1 has not arrived yet (NO in S100), ECU 78 waits for the arrival of time t1. If time t1 has arrived (YES in S100), ECU 78 requests power equipment 5 to transmit grid code information GC to vehicle 6 (S104). Specifically, ECU 78 transmits request signal RQ to power equipment 5 through communication device 70. In this example, request signal RQ is transmitted to power equipment 5A.

Upon receiving request signal RQ through communication unit 55B, controller 59 of power equipment 5 transmits grid code information GC to vehicle 6 (S206).

Upon receiving (obtaining) grid code information GC through communication device 70, ECU 78 stores the obtained grid code information GC into storage device 77, as grid code information 135 (Fig. 4) (S108). Charge-discharge controller 67 controls transmit power TP in accordance with grid code information 135 (S115). Controller 59 of power equipment 5 controls feed power FP in accordance with grid code information GC stored in storage unit 58 (S217). Subsequently, upon arrival of the end time (time t2) of period T1, charge-discharge controller 67 of vehicle 6 turns charge-discharge relay 64 off and thereby stops the output of transmit power TP to power equipment 5 (S120). Subsequently, the process by vehicle 6 proceeds to S130 (Fig. 7). Controller 59 of power equipment 5 turns relay 53 off and thereby stops the supply of feed power FP to power grid PG (S225). Subsequently, the process by power equipment 5 proceeds to S235 (Fig. 7).

Referring to Fig. 7, controller 59 of power equipment 5 determines whether the regulation period after period T1 has begun (S235). In this example, controller 59 determines whether the start time of the regulation period after period T1 has arrived, in accordance with regulation period information ATI. Suppose that the regulation period is period T2 and the start time of the regulation period is time t3. If time t3 has not arrived yet (NO in S235), controller 59 waits for the arrival of time t3. If time t3 has arrived (YES in S235), the process by power equipment 5 proceeds to S250.

ECU 78 of vehicle 6 determines whether a regulation period (period T2) after period T1 has begun, in accordance with regulation period information 105 (S130). If time t3 has not arrived yet (NO in S130), ECU 78 waits for the arrival of time t3. If time t3 has arrived (YES in S130), ECU 78 determines whether the above-mentioned stationary condition is met (S140).

If the stationary condition is met (YES in S140), vehicle 6 participates in the power supply regulation, using the same power equipment 5 (in this example, power equipment 5A) during periods T1 and T2. Thus, charge-discharge controller 67 controls transmit power TP in accordance with grid code information 135 stored in storage device 77 in S108 (S142).

If the stationary condition is not met (NO in S140), vehicle 6 is already participating in the power supply regulation using power equipment 5A during period T1, and will participate in a power supply regulation using another power equipment 5 (e.g., power equipment 5B or 5C) during period T2. Thus, ECU 78 deletes grid code information 135 from storage device 77 (S143). Then, ECU 78 requests the other power equipment 5 (e.g., power equipment 5B or 5C) to send grid code information GC to vehicle 6 (S144). Specifically, ECU 78 transmits request signal RQ to power equipment 5. This allows vehicle 6 to newly obtain grid code information GC from power equipment 5, as described below. As a result, vehicle 6 is allowed to appropriately participate in the power supply regulation, using power equipment 5.

Controller 59 of power equipment 5 determines whether controller 59 receives request signal RQ within a predetermined time since S235 (S250). Upon receiving request signal RQ (YES in S250), controller 59 transmits grid code information GC of power equipment 5 to vehicle 6 (S252). If controller 59 does not receive request signal RQ (NO in S250), or after S252, controller 59 controls feed power FP in accordance with grid code information GC stored in storage unit 58 (S254). Subsequently, upon the arrival of the end time of period T2 (time t4), controller 59 stops the supply of feed power FP to power grid PG (S262).

Upon newly receiving (obtaining) grid code information GC from power equipment 5 after S144, ECU 78 of vehicle 6 controls transmit power TP in accordance with grid code information GC obtained in such a manner (S158). ECU 78 stores the obtained grid code information GC into storage device 77, as new grid code information 135. As time t4 arrives after S142 and S158, charge-discharge controller 67 stops the output of transmit power TP to power equipment 5 (S160).

In the above, ECU 78 may perform the determination processes of S110 and S130 according to whether participation request PR, requesting vehicle 6 to immediately participate in the power supply regulation, is received from server 8 through communication device 70. For example, in S110, ECU 78 determines, upon receiving participation request PR, that the period T1 has begun. Similarly, in S130, ECU 78 determines, upon receiving participation request PR, that the period T2 has begun.

Alternatively, ECU 78 may perform the determination processes of S110 and S130 according to whether ECU 78 receives initiation command INS from power equipment 5 through communication device 70. For example, in S110, ECU 78 determines, upon receiving initiation command INS, that the period T1 has begun. Similarly, in S130, ECU 78 determines, upon receiving initiation command INS, that the period T2 has begun.

Alternatively, ECU 78 may perform the determination processes of S110 and S130 according to whether a user operation instructing to immediately output transmit power TP to power equipment 5 has been performed using HMI 76. For example, in S110, when the user operation is performed, ECU 78 determines that the period T1 has begun. Similarly, in S130, when the user operation is performed, ECU 78 determines that the period T2 has begun.

As described above, according to the embodiment, if the stationary condition is met at the beginning of period T2, transmit power TP is controlled in accordance with grid code information 135 stored in storage device 77. Accordingly, ECU 78 is not required to obtain, again, the grid code information from power equipment 5 in order to allow vehicle 6 to participate in the power supply regulation during period T2. Stated differently, a communication process for obtaining grid code information GC at the beginning of period T2 can be obviated. This starts the output of transmit power TP from vehicle 6 to power equipment 5 during period T2 earlier by the time taken for the communication process. As a result, the timing of the start of powering from power equipment 5 to power grid PG quickly starts. Thus, vehicle 6 is allowed to promptly participate in the power supply regulation during period T2.

### [Variation 1]

The stationary condition may be any one of second, third, fourth, and fifth conditions shown below.

The second condition is a condition that the shift range is fixed at P range across period TA. ECU 78 determines whether the second condition is met, in accordance with regulation period information 105 and operational history information 110. If the shift range is P range, vehicle 6 is in stationary. Accordingly, the second condition appropriately indicates that the vehicle 6 has been in stationary across period TA.

The third condition is a condition that the parking brake of vehicle 6 is kept applied (a parking brake state) using operating member 73 across period TA. ECU 78 determines whether the third condition is met, in accordance with regulation period information 105 and operational history information 115. If vehicle 6 is in the parking brake state, vehicle 6 is in stationary. Accordingly, the third condition appropriately indicates that the vehicle 6 has been in stationary across period TA.

The fourth condition may be a condition that the measurement by vehicle speed sensor 74 is kept at zero across period TA. ECU 78 determines whether the fourth condition is met, in accordance with regulation period information 105 and vehicle speed history information 120. The measurement by vehicle speed sensor 74 reflects whether vehicle 6 is in stationary. Accordingly, the fourth condition appropriately indicates that the vehicle 6 has been in stationary across period TA.

The fifth condition may be a condition that the variations in location of vehicle 6 during period TA, indicated by the positional information of vehicle 6, are less than a predetermined trivial amount. ECU 78 determines whether the fifth condition is met, in accordance with regulation period information 105 and positional information history 125. The positional information reflects whether vehicle 6 is in stationary. Since the positional information can contain an error in accuracy, there may be small variations in location of vehicle 6 indicated by the positional information. However, if the variations in location are less than the trivial amount, vehicle 6 is, in fact, highly likely in stationary. Accordingly, the fifth condition appropriately indicates that the vehicle 6 has been in stationary across period TA.

### [Variation 2]

In Variation 2, power equipment 5 that receives transmit power TP and powers power grid PG during period T1 will also be referred to as "first equipment." Similarly, power equipment 5 that receives transmit power TP and powers power grid PG during period T2 will also be referred to as "second equipment."

In the embodiment and Variation 1 thereof, control device 79 performs the first storing process and the power transmission in accordance with grid code information 135 if the stationary condition is met at the beginning of period T2. In Variation 2, in contrast, control device 79 determines whether the first equipment and the second equipment are the same, in accordance with the identification information of the first equipment and the identification information of the second equipment. If determined that these equipment are the same, control device 79 performs the first storing process, and the power transmission in accordance with grid code information 135.

ECU 78 determines whether the second equipment is the same as the first equipment as follows: As period T1 begins, ECU 78, initially, obtains identification information ID (Fig. 2) of the first equipment from the first equipment through communication device 70 and stores identification information ID of the first equipment into storage device 77 (the second storying process). Subsequently, as period T2 begins, ECU 78 obtains identification information ID of the second equipment from the second equipment through communication device 70. ECU 78 determines whether the second equipment is the same as the first equipment according to whether the obtained identification information ID of the second equipment is the same as identification information ID of the first equipment stored in storage device 77 by the second storying process.

For example, if the first equipment and the second equipment are determined to be the same (e.g., if these equipment are power equipment 5A), charge-discharge controller 67 controls transmit power TP during period T2 in accordance with grid code information 135 stored in storage device 77 by the first storing process. For example, if the first equipment and the second equipment are determined to be different (In one example, if the first equipment is power equipment 5A and the second equipment is power equipment 5B (or 5C)), on the other hand, ECU 78 obtains grid code information GC from the second equipment at the beginning of period T2. Then, in accordance with grid code information GC obtained in such a manner, charge-discharge controller 67 controls transmit power TP during period T2. ECU 78 stores the obtained grid code information GC into storage device 77, as new grid code information 135.

If vehicle 6 participates in the power supply regulation using the same power equipment 5 during periods T1 and T2 (if the second equipment is the same as the first equipment), grid code information 135 stored in storage device 77 by the first storing process is suitable grid code information to be used during period T2 too. In this case, vehicle 6 is not required to obtain, again, grid code information GC from the second equipment at the beginning of period T2.

According to Variation 2, if identification information ID of the second equipment is the same as identification information ID stored in storage device 77 by the second storying process, transmit power TP from vehicle 6 to the second equipment during period T2 is controlled in accordance with grid code information 135. For example, after vehicle 6 participates in the power supply regulation using power equipment 5 during period T1, connector 57 may be unplugged from inlet 60 and vehicle 6 may move to elsewhere in period TA. Controlling transmit power TP as described above causes the output of transmit power TP from vehicle 6 to power equipment 5 to quickly start in period T2 even if vehicle 6 moves as such and vehicle 6 participates in the power supply regulation in period T2 using the same power equipment 5 as that in period T1. As a result, vehicle 6 is allowed to promptly participate in the power supply regulation during period T2.

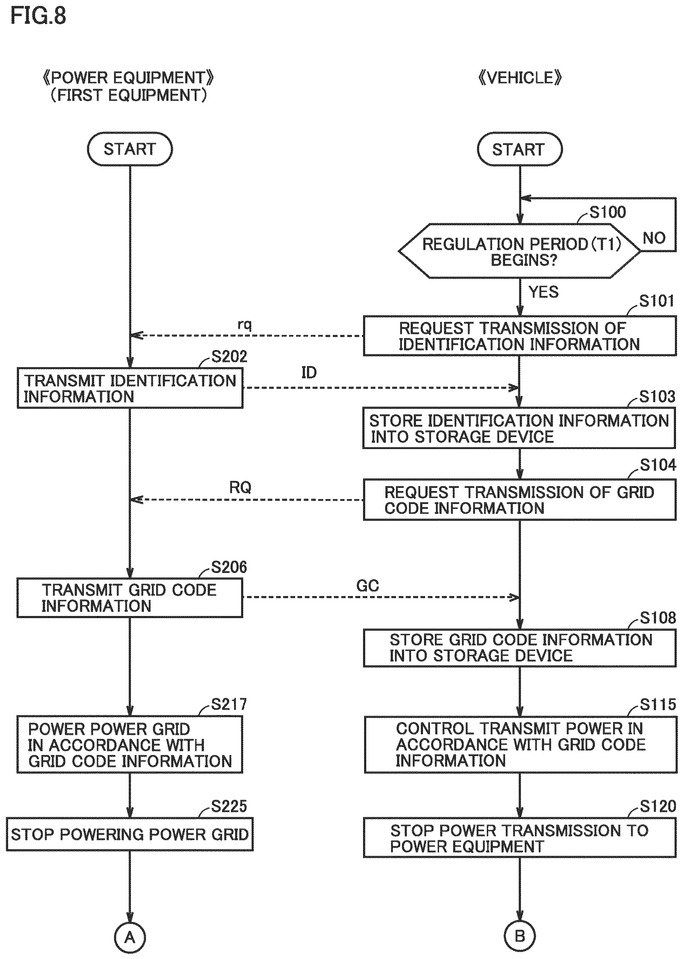

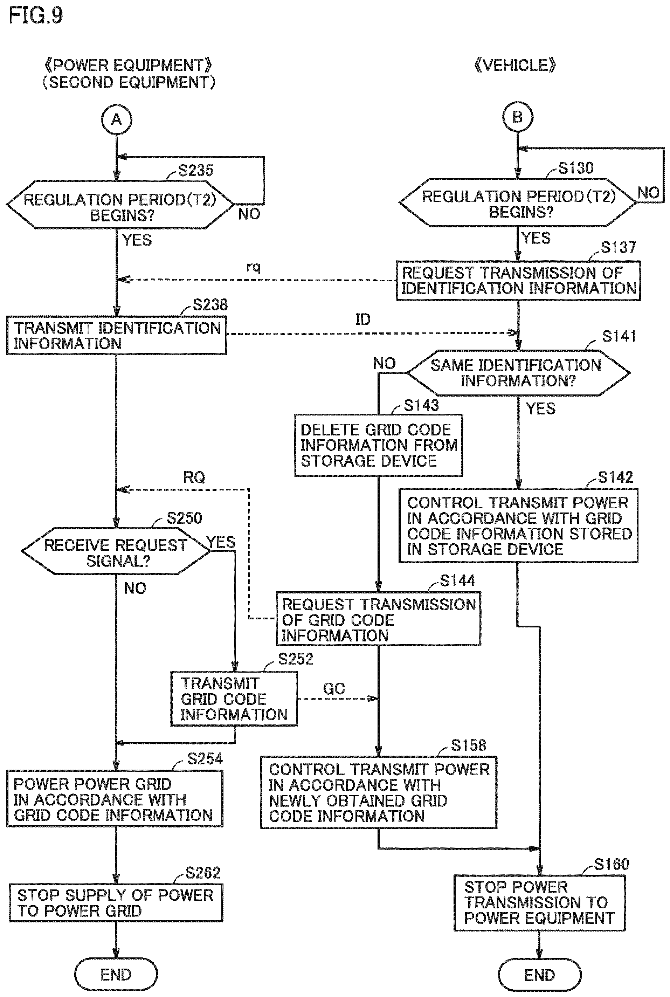

Figs. 8 and 9 are flowcharts illustrating a procedure performed by vehicle 6 and power equipment 5, according to Variation 2. Referring to Fig. 8, the flowchart differs from the flowchart of Fig. 6 according to the embodiment, in that the flowchart of Fig. 8 additionally includes S101 and S102. The other details of the flowchart of Fig. 8 are basically the same as the flowchart of Fig. 6. Accordingly, detailed descriptions will not be repeated.

As period T1 begins (YES in S100), ECU 78 requests the first equipment to transmit identification information ID to vehicle 6 (S101). Specifically, ECU 78 transmits a transmission request rq to the first equipment for the identification information. In this example, the first equipment is power equipment 5A. In response to transmission request rq, controller 59 of the first equipment transmits identification information ID of the first equipment to vehicle 6 (S202). Upon receiving (obtaining) identification information ID transmitted from the first equipment, ECU 78 stores identification information ID into storage device 77 (S103). Subsequently, S104 to S120, and S206 to S225 are performed.

Referring to Fig. 9, the flowchart differs from the flowchart of Fig. 7 according to the embodiment, in that the flowchart of Fig. 9 additionally includes S 137 and S238 and performs S141, instead of S140. The other details of the flowchart of Fig. 9 are basically the same as the flowchart of Fig. 7. Accordingly, detailed descriptions will not be repeated.

As period T2 begins (YES in S130), ECU 78 requests the second equipment to transmit identification information ID to vehicle 6 (S137). Specifically, ECU 78 transmits transmission request rq to the second equipment for the identification information. In response to transmission request rq, controller 59 of the second equipment transmits identification information ID of the second equipment to vehicle 6 (S238). Upon receiving (obtaining) identification information ID from the second equipment, ECU 78 determines whether identification information ID is the same as the information ID stored in storage device 77 in S103 (S141).

If these identification information ID are the same, for example, the first equipment and the second equipment are both power equipment 5A (YES in S141), charge-discharge controller 67 controls transmit power TP in accordance with grid code information 135 stored in storage device 77 (S142). If these identification information ID differ from each other, for example, the first equipment is power equipment 5A and the second equipment is power equipment 5B or 5C (NO in S141), ECU 78 deletes grid code information 135 from storage device 77 (S143) and transmits request signal RQ to the second equipment (S144). The subsequent process steps are the same as those in the example of Fig. 7.

As described above, according to Variation 2, even if vehicle 6 moves after period T1 and then participates in the power supply regulation during period T2, vehicle 6 is allowed to promptly participate in the power supply regulation in period T2.

### [Other Variations]

In the above, the power stored in power storage device 61 is used to output transmit power TP by inverter 63. If vehicle 6 is a PHEV or an FCEV, in contrast, the engine may be driven to cause a motor (not shown) of vehicle 6 to generate power and the power may be used to output transmit power TP to power equipment 5. In this case, the engine and the motor correspond to one example of a "power output device" according to the present disclosure.

While the embodiment according to the present disclosure has been described above, the presently disclosed embodiment should be considered in all aspects illustrative and not restrictive. The scope of the present disclosure is defined by the appended claims. All changes which come within the meaning and range of equivalency of the appended claims are to be embraced within their scope.

## Claims

1. A power system (1), comprising:
power equipment (5) configured to be connected to a power grid (PG); and
an electric-powered vehicle (6), wherein
the power equipment (5) includes:
a powering unit (52) configured to receive transmit power from the electric-powered vehicle (6) and power the power grid (PG) in each of a first period and a second period subsequent to the first period, the first period and the second period each being a period during which power supply regulation is performed at the power grid (PG); and
a storage unit (58) for storing grid code information indicating a rule for powering the power grid (PG) by the powering unit (52), wherein
the electric-powered vehicle (6) includes:
a storage device (77);
a communication device (70) for communicating with the power equipment (5);
a power output device (61, 62) for outputting the transmit power to the power equipment (5); and
a control device (79) configured to obtain the grid code information from the power equipment (5) through the communication device (70) when the first period begins and to control the transmit power during the first period, in accordance with the obtained grid code information, wherein
the control device (79) is configured to store the obtained grid code information into the storage device (77), and
the control device (79) is configured to control the transmit power during the second period, in accordance with the grid code information stored in the storage device (77), when the second period begins and a predetermined condition is met, the predetermined condition indicating that the electric-powered vehicle (6) has been in stationary across a third period from an end of the first period to a beginning of the second period.

2. The power system (1) according to claim 1, wherein
the power equipment (5) further includes a power cable (51b) for transmission of the transmit power and a connector (57) attached to the power cable (51b),
the electric-powered vehicle (6) further includes an inlet (60) to which the connector (57) is connected, and
the predetermined condition includes a condition that the connector (57) is kept connected to the inlet (60) across the third period.

3. The power system (1) according to claim 1, wherein
the electric-powered vehicle (6) further includes a shift lever (72), and
the predetermined condition includes a condition that the shift lever (72) is fixed at a parking range across the third period.

4. The power system (1) according to claim 1, wherein
the storage unit (58) is configured to further store identification information of the power equipment (5),
the control device (79) is configured to obtain the identification information of first equipment through the communication device (70) from the first equipment as the power equipment (5) that receives the transmit power during the first period,
the control device (79) is configured to obtain the identification information of second equipment through the communication device (70) from the second equipment as the power equipment (5) that receives the transmit power during the second period, and
the control device (79) is configured to control the transmit power to the second equipment during the second period, in accordance with the grid code information stored in the storage device (77), when the identification information of the second equipment is the same as the identification information of the first equipment.

5. The power system (1) according to any one of claims 1 to 4, wherein
the grid code information includes a predetermined threshold of a frequency or a voltage of the power grid (PG), for limiting the powering by the powering unit (52).

6. An electric-powered vehicle (6) configured to output transmit power to power equipment (5) that powers a power grid (PG) during a period of power supply regulation at the power grid (PG), the electric-powered vehicle (6) comprising:
a storage device (77);
a communication device (70) for communicating with the power equipment (5);
a power output device (61, 62) configured to output the transmit power to the power equipment (5); and
a control device (79) configured to obtain grid code information from the power equipment (5) through the communication device (70), when a first period, which is the period for the power supply regulation, begins, and to control the transmit power during the first period, in accordance with the obtained grid code information, wherein
the grid code information indicates a rule for powering the power grid (PG) by the power equipment (5),
the control device (79) is configured to store the obtained grid code information into the storage device (77), and
the control device (79) is configured to control the transmit power during a second period, in accordance with the grid code information stored in the storage device (77), when the second period, which is a period for the power supply regulation after the first period, begins and a predetermined condition is met, the predetermined condition indicating that the electric-powered vehicle (6) has been in stationary across a third period from an end of the first period to a beginning of the second period.
